# EUROPÄISCHE PATENTSCHRIFT

(11) **EP 0 641 821 B1**
(45) Veröffentlichungstag und Bekanntmachung des Hinweises auf die Patenterteilung: **10.11.1999**
(21) Anmeldenummer: 94113046.0
(22) Anmeldetag: 22.08.1994
(51) Int. Cl.: C08K 3/04, B41M 5/24, C08L 101/00

(54) **Pigmentierte Kunststoff-Formmasse und ihre Verwendung**
Pigmented resinous moulding matter and its utilisation
Matière de moulage résineuse pigmentée et son utilisation

(30) Priorität: 01.09.1993 DE 4329395; 27.12.1993 DE 4344690
(43) Veröffentlichungstag der Anmeldung: 08.03.1995
(73) Patentinhaber: Ticona GmbH, 65451 Kelsterbach (DE)
(72) Erfinder: Kurz, Klaus, Dr., D-65719 Hofheim (DE)

(56) Entgegenhaltungen:
- EP-A- 0 053 256
- EP-A- 0 101 667
- EP-A- 0 400 305
- EP-A- 0 522 370

## Beschreibung

Die Erfindung betrifft eine Kunststoff-Formmasse, die im wesentlichen aus mindestens einem organischen Polymer, mindestens einem kohlenstoffhaltigen Schwarzpigment und mindestens einem weiteren Farbmittel besteht, sowie die Verwendung einer solchen Kunststoff-Formmasse als Ausgangsmaterial für die Herstellung von geformten Gegenständen, die mit Hilfe von Laser-Strahlung bevorzugt mit farbigen Zeichen versehen werden können.

Es ist bekannt, Kunststoff-Oberflächen mittels Laser-Strahlung zu beschriften, wobei vorzugsweise ein Nd:YAG-Laser (Wellenlänge: 1064 nm) oder ein frequenzverdoppelter Nd:YAG-Laser (Wellenlänge: 532 nm) Verwendung findet. Dabei ist eine gezielt einstellbare Farbänderung nicht flexibel realisierbar: Im allgemeinen sind nur helle Schriften auf dunklem Hintergrund oder dunkle Schriften auf hellem Hintergrund möglich. So wird beispielsweise ein Schwarz-Weiß-Kontrast in Polyacetal, dem als Füllstoff Ruß oder Graphit, vorzugsweise in einer Konzentration von 0,08 bis 0,125 %, beigefügt wird, mit einem Laser-Strahl erzeugt. Der Kunststoff/Ruß- bzw. Graphit-Mischung kann noch ein optischer Aufheller beigemischt sein, der durch die Laser-Einwirkung nicht zerstört wird (EP-B-53 256).

Ferner sind Verfahren zur Beschriftung von hochmolekularem Material bekannt, das mindestens einen strahlungsempfindlichen, eine Verfärbung verursachenden Zusatzstoff enthält, wobei man als Energiestrahlung Laser-Licht, dessen Wellenlänge im nahen UV- und/oder sichtbaren und/oder nahen IR-Bereich liegt, und als Zusatzstoff mindestens ein anorganisches und/oder organisches Pigment und/oder einen polymerlöslichen Farbstoff verwendet. Das hochmolekulare Material ist vor allem ein vollsynthetischer organischer Thermoplast, d. h. ein Kunststoff, der durch Polymerisation, Polykondensation oder Polyaddition hergestellt worden ist, z. B. Polyolefin, Polyester, Polyamid, Polyether und Polyacetal, oder auch ein Gemisch solcher Kunststoffe. Beispiele von anorganischen Pigmenten sind Weißpigmente, Metalloxide, Metallsulfide sowie Ruß und Graphit, wobei die metallhaltigen Pigmente bevorzugt sind. Die Menge des Zusatzstoffes beträgt 0,001 bis 10 Gew.-% (bezogen auf das hochmolekulare Material). Als Strahlungsquelle dienen gepulste Laser, z. B. Festkörper-Puls-Laser, mit Puls modifizierte Dauerstrich-Laser, Metalldampf-Laser und Halbleiter-Laser (EP-A 190 997)

Ebenfalls bekannt ist ein Verfahren zur Laser-Beschriftung von hochmolekularem organischem Material in Form von Gegenständen, Folien und Filmen, wonach das Material, das mindestens einen strahlungsempfindlichen ausbleichbaren Zusatzstoff und mindestens eine weniger strahlungsempfindliche nicht ausbleichende Verbindung enthält, einem Laser-Strahl ausgesetzt ist; dabei wird gepulstes Laser-Licht verwendet, dessen Wellenlänge im nahen UV- und/oder sichtbaren Bereich liegt, als ausbleichbarer Zusatzstoff wird mindestens ein Azo- und/oder Indanthronpigment eingesetzt, und als nicht ausbleichende Verbindung dient mindestens ein anorganisches und/oder organisches Pigment und/oder ein polymerlöslicher Farbstoff. Das gepulste Laser-Licht wird hier insbesondere mit einem gepulsten oder pulsmodifizierten, frequenzverdoppelten Nd:YAG-Laser oder einem Metalldampf-Laser oder einem Excimer-Laser erzeugt (EP-A 327 508).

Nach den bekannten Verfahren können aber keine farbigen Markierungen auf dunklem Untergrund hergestellt werden. Aufgabe der Erfindung ist es, die Nachteile des Standes der Technik zu umgehen.

Die Erfindung betrifft eine Kunststoff-Formmasse, gemäß Anspruch 1.

Die Erfindung betrifft ferner die Verwendung der vorstehend beschriebenen Kunststoff-Formmasse als Material zur Herstellung von geformten Gegenständen, die mit Hilfe von Laser-Strahlung mit farbigen Zeichen versehen werden können.

Weiterhin betrifft die Erfindung ein Verfahren zur Herstellung eines mit farbigen Zeichen versehenen Formkörpers durch die Einwirkung von Laser-Strahlung auf einen Gegenstand, der aus einer Kunststoff-Formmasse hergestellt wurde. Bei diesen Verfahren verwendet man eine Kunststoff-Formmasse, gemäß Anspruch 1, und setzt den Formkörper einer Laser-Strahlung mit einer Hauptwellenlänge von 1064 nm oder von 532 nm aus.

Es hat sich herausgestellt, daß unter Einsatz der mineralischen Schwarzpigmente besonders klare farbige Zeichen auf dunklem Hintergrund erreichbar sind.

Das Polymer (a), das gemäß der Erfindung verwendet wird, ist ein thermoplastisches Polymer, nämlich Oxymethylen-Homopolymere und Oxymethylen-Copolymere, die bevorzugt Oxyethylen-Einheiten als Cobausteine enthalten oder Polybutylenterephthalat. An Stelle eines einzelnen Polymers ist auch ein Gemisch verschiedener Polymere verwendbar.

Das Pigment (b) ist ein mineralisches Schwarzpigment mit elementarem Kohlenstoff, das unter den Bezeichnungen Knochenkohle, Knochenschwarz oder Elfenbeinschwarz bekannt ist. Es wird durch ein spezielles Verkokungsverfahren aus Knochen oder Elfenbeinabfällen hergestellt, wobei sich die in den Substraten befindlichen organischen Anteile zersetzen und der gebildete Kohlenstoff als Pigment in einer Calciumphosphatmatrix eingelagert wird. Das mineralische Schwarzpigment enthalt 70 bis 90 Gew.-% Calciumphosphat und 10 bis 30 Gew.-% Kohlenstoff, vorzugsweise 75 bis 85 Gew.-% Calciumphosphat und 15 bis 25 Gew.-% Kohlenstoff. Der Anteil des Schwarzpigments in der Kunststoff-Formmasse beträgt 0,001 bis 10 Gew.-%, vorzugsweise 0,01 bis 8 Gew.-%, insbesondere 0,2 bis 5 Gew.-%.

Die Dichte des Schwarzpigments liegt im Bereich von 2,3 bis 2,8 g/cm³, vorzugsweise von 2,4 bis 2,6 g/cm³. Besonders geeignet ist ein Schwarzpigment mit einem Teilchendurchmesser von 1 bis 50 µm, vorzugsweise von 2 bis 25 µm.

Das Farbmittel (c) gemäß Anspruch 1 ist ein anorganisches und/oder organisches Pigment und/oder ein polymerlöslicher Farbstoff.

Je nach Verwendungszweck können der Formmasse noch weitere Stoffe zugefügt werden, beispielsweise Füllstoffe wie Kreide, Glimmer, Talkum, Feldspate, Wollastonit, Aluminiumsilikat, ferner Antioxidantien, Lichtschutzmittel, Flammschutzmittel, Hitzestabilisatoren, Verstärkungsmittel, wie Glasfasern, oder Verarbeitungshilfsmittel, welche bei der Verarbeitung von Kunststoffen üblich sind.

Die Herstellung der Formmasse gemäß der Erfindung kann nach den üblichen Verfahren erfolgen. So wird z. B. die Schwarzpigmentkomponente (b) und die Farbmittelkomponente (c) dem Kunststoffmaterial unter Verwendung von Extrudern, Misch- oder Mahlapparaten zugemischt. Die erhaltene Mischung wird dann nach an sich bekannten Verfahren wie Pressen, Gießen, Kalandrieren, Extrudieren oder durch Spritzguß in die gewünschte endgültige Form gebracht. Die Beschriftung mit dem Laser erfolgt derart, daß der Probenkörper in den Strahlengang eines gepulsten Lasers, z. B. eines Nd:YAG-Lasers oder frequenzverdoppelten Nd:YAG-Lasers gebracht wird. Die Verwendung der Kunststoff-Formmasse gemäß der Erfindung kann auf solchen Gebieten erfolgen, wo bisher übliche Druckverfahren zur Beschriftung eingesetzt wurden. So kann das Verfahren zur Beschriftung bzw. Markierung von Formkörpern aus thermoplastischem Material in der Elektronik- und Kraftfahrzeugindustrie Anwendung finden, z. B. zur Kennzeichnung von Tastaturen, Gehäusen und Einzelteilen. Diese Gegenstände können mit Hilfe von Laser-Strahlung problemlos mit Zeichen versehen werden.

### Beispiele

Die Beispiele wurden unter folgenden Bedingungen durchgeführt: In einem handelsüblichen Extruder (ZSK 28, Firma Werner und Pfleiderer, Stuttgart, Bundesrepublik Deutschland) wurde ein homogenes Gemisch aus (a) einem thermoplastischen Polymer, (b) einem mineralischen Schwarzpigment und (c) einem Farbstoff hergestellt.

Aus der erhaltenen Formmasse wurden durch Spritzgießen plattenförmige Probenkörper hergestellt (120 mm x 80 mm x 2 mm). Die Probekörper der Beispiele 1 bis 9 wurden der Strahlung eines Nd:YAG-Lasers der Wellenlänge 1064 nm ausgesetzt: Die Pulsfrequenz betrug 15 kHz bei einer Laserleistung von ca. 20 Watt. Das Beschriftungsfeld des Nd:YAG-Lasers hatte einen Durchmesser von 150 mm bei einem freien Arbeitsabstand von 180 mm. Während der Strahlungsdauer wurde der Laser-Strahl derart bewegt, daß auf den Probekörpern Schriftzeichen entstanden. Je nach verwendetem Farbstoff entstanden farbige Schriftzeichen auf dunklem Hintergrund.

Als thermoplastische Polymere wurden verwendet:
a) "POM" - ein handelsübliches Polyacetal-Copolymer (98 Gew.-% Oxymethylen-Einheiten und 2 Gew.-% Oxyethylen-Einheiten) mit einem Schmelzindex MFI_{190/2,16} von 9 g/10 min nach DIN 53735 und einem Kristallitschmelzbereich von 164 bis 167°C,
b) "PBT" - ein handelsübliches Polybutylenterephthalat mit einem Schmelzindex MVI_{250/2,16} von 25 cm³/10 min nach DIN 53735, Kristallitschmelzpunkt 220-225°C (ASTM D 2133).

1) Zusammensetzung der Formmasse:
   - 99: Gew.-T. POM
   - 1: Gew.-T. mineralisches Schwarzpigment (C.I. Pigment Black 9)
   - 0,2: Gew.-T. organisches Rotpigment (C.I. Pigment Red 209)
   Durch Laserbestrahlung erzeugte klare farbige Schriftzeichen:
   Rot auf dunklem Hintergrund.
2) Zusammensetzung der Formmasse:
   - 99: Gew.-T. POM
   - 1: Gew.-T. mineralisches Schwarzpigment (C.I. Pigment Black 9)
   - 0,2: Gew.-T. organisches Gelbpigment (C.I. Pigment Yellow 180)
   Durch Laserbestrahlung erzeugte klare farbige Schriftzeichen:
   Gelb auf dunklem Hintergrund.
3) Zusammensetzung der Formmasse:
   - 99: Gew.-T. POM
   - 1: Gew.-T. mineralisches Schwarzpigment (C.I. Pigment Black 9)
   - 0,2: Gew.-T. organisches Grünpigment (C.I. Pigment Green 7)
   Durch Laserbestrahlung erzeugte klare farbige Schriftzeichen:
   Grün auf dunklem Hintergrund.
4) Zusammensetzung der Formmasse:
   - 98: Gew.-T. POM
   - 2: Gew.-T. mineralisches Schwarzpigment (C.I. Pigment Black 9)
   - 0,4: Gew.-T. organisches Rotpigment (C.I. Pigment Red 209)
   Durch Laserbestrahlung erzeugte klare farbige Schriftzeichen:
   Rot auf dunklem Hintergrund.
5) Zusammensetzung der Formmasse:
   - 99: Gew.-T. PBT
   - 1: Gew.-T. mineralisches Schwarzpigment (C.I. Pigment Black 9)
   - 0,2: Gew.-T. organisches Rotpigment (C.I. Pigment Red 209)
   Durch Laserbestrahlung erzeugte klare farbige Schriftzeichen:
   Rot auf dunklem Hintergrund.
6) Zusammensetzung der Formmasse:
   - 99: Gew.-T. POM
   - 1: Gew.-T. mineralisches Schwarzpigment (C.I. Pigment Black 9)
   - 0,2: Gew.-T. orangefarbiger Fluoreszenzfarbstoff (C.I. Solvent Orange 63)
   Durch Laserbestrahlung erzeugte klare farbige Schriftzeichen:
   Orange auf dunklem Hintergrund.
7) Zusammensetzung der Formmasse:
   - 99: Gew.-T. POM
   - 1: Gew.-T. mineralisches Schwarzpigment (C.I. Pigment Black 9)
   - 0,2: Gew.-T. violetter Sublimationsfarbstoff (C.I. Solvent Violett 13)
   Durch Laserbestrahlung erzeugte klare farbige Schriftzeichen:
   Hellblau auf dunklem Hintergrund.
8) Zusammensetzung der Formmasse:
   - 99: Gew.-T. POM
   - 1: Gew.-T. mineralisches Schwarzpigment (C.I. Pigment Black 9)
   - 0,2: Gew.-T. organisches Blaupigment (C.I. Pigment Blue 15:3)
   Durch Laserbestrahlung erzeugte klare farbige Schriftzeichen:
   Blau auf dunklem Hintergrund.
9) Zusammensetzung der Formmasse:
   - 99: Gew.-T. POM
   - 1: Gew.-T. mineralisches Schwarzpigment (C.I. Pigment Black 9)
   - 0,2: Gew.-T. organisches Blaupigment (C.I. Pigment Blue 15:3)
   - 0,2: Gew.-T. organisches Gelbpigment (C.I. Pigment Yellow 180)
   Durch Laserbestrahlung erzeugte klare farbige Schriftzeichen:
   Mischfarbe auf dunklem Hintergrund.
10) Zusammensetzung der Formmasse wie Beispiel 1.
   Anstelle des Nd:YAG-Lasers der Wellenlänge 1064 nm wurde ein frequenzverdoppelter Nd:YAG-Laser der Wellenlänge 532 nm (Pulsfrequenz 5 kHz, Leistung ca. 3 Watt) verwendet.
   Es entstand eine klare rote Schrift auf dunklem Hintergrund.

## Patentansprüche

1. Kunststoff - Formmasse, dadurch gekennzeichnet, daß sie (a) aus Polyoxymethylen (POM) oder Polybutylenterephthalat (PBT), (b) 0,01 bis 8 Gew.-% Knochenkohle, enthaltend 70 bis 90 Gew.-% Calciumphosphat und 30 bis 10 Gew.-% Kohlenstoff, wobei der Kohlenstoff in eine Matrix aus Calciumphosphat eingelagert ist, und (c) mindestens einem weiteren Färbemittel, ausgewählt aus der Gruppe umfassend C.l.Pigment Yellow 180, C.I. Pigment Red 209, C.l. Pigment Brown 24, C.l. Pigment Green 7, C.l. Pigment Blue 15:3, C.l. Solvent Orange 63 oder C.l. Solvent Violett 13, besteht.

2. Kunststoff - Formmasse nach Anspruch 1, dadurch gekennzeichnet, daß die Komponente (a) ein Oxymethylencopolymer ist.

3. Kunststoff - Formmasse nach Anspruch 1 oder 2, dadurch gekennzeichnet, daß der Teilchendurchmesser des Pigments (b) im Bereich von 1 bis 50 µm liegt.

4. Kunststoff - Formmasse nach einem oder mehreren der Ansprüche 1 bis 3, dadurch gekennzeichnet, daß die Menge des Färbemittels (c) 0,001 bis 10 Gew.-% beträgt.

5. Verfahren zur Herstellung eines mit farbigen Zeichen versehenen Formkörpers aus einer Kunststoff - Formmasse durch Einwirkung von Laser-Strahlung, dadurch gekennzeichnet, daß man eine Kunststoff - Formmasse einsetzt, die zusammengesetzt ist aus (a) Polyoxymethylen (POM) oder Polybutylenterephthalat (PBT), (b) 0,01 bis 8 Gew.-% Knochenkohle, enthaltend 70 bis 90 Gew.-% Calciumphosphat und 30 bis 10 Gew.-% Kohlenstoff, wobei der Kohlenstoff in eine Matrix aus Calciumphosphat eingelagert ist und (c) mindestens einem weiteren Färbemittel, ausgewählt aus der Gruppe umfassend C.l. Pigment Yellow 180, C.l. Pigment Red 209, C.l. Pigment Brown 24, C.l. Pigment Green 7, C.I. Pigment Blue 15:3, C.l. Solvent Orange 63 oder C.l. Solvent Violett 13, und den Formkörper einer Laser-Strahlung mit einer Hauptwellenlänge von 1064 nm oder von 532 nm aussetzt.

6. Kunststoff - Formmasse nach einem oder mehreren der Ansprüche 1 bis 4 oder Verfahren zur Herstellung nach Anspruch 5, dadurch gekennzeichnet, daß die Formmasse gegebenfalls (d) weitere Zusatzstoffe enthält.

7. Verwendung der Kunstoff - Formmasse gemäß einem oder mehreren der Ansprüche 1 bis 4 und 6 als Material zur Herstellung von geformten Gegenständen, die mit Hilfe von Laser-Strahlung mit farbigen Zeichen versehen werden.

## Claims

1. A plastics molding composition, which comprises (a) polyoxymethylene (POM) or polybutylene terephthalate (PBT), (b) 0.01 to 8% by weight of bone charcoal, containing 70 to 90% by weight of calcium phosphate and 30 to 10% by weight of carbon, the carbon being embedded in a matrix of calcium phosphate, and (c) at least one further coloring agent, selected from the group consisting of C.I. Pigment Yellow 180, C.I. Pigment Red 209, C.I. Pigment Brown 24, C.I. Pigment Green 7, C.I. Pigment Blue 15:3, C.I. Solvent Orange 63 or C.I. Solvent Violet 13.

2. A plastics molding composition as claimed in claim 1, wherein the component (a) is an oxymethylene copolymer.

3. A plastics molding composition as claimed in claim 1 or 2, wherein the particle diameter of the pigment (b) is in the range from 1 to 50 µm.

4. A plastics molding composition as claimed in one or more of claims 1 to 3, wherein the amount of the coloring agent (c) is 0.001 to 10% by weight.

5. A process for the production of a shaped article provided with colored symbols from a plastics molding composition by the action of a laser beam, which comprises employing a plastics molding composition which is composed of (a) polyoxymethylene (POM) or polybutylene terephthalate (PBT), (b) 0.01 to 8% by weight of bone charcoal, containing 70 to 90% by weight of calcium phosphate and 30 to 10% by weight of carbon, the carbon being embedded in a matrix of calcium phosphate, and (c) at least one further coloring agent, selected from the group consisting of C.I. Pigment Yellow 180, C.I. Pigment Red 209, C.I. Pigment Brown 24, C.I. Pigment Green 7, C.I. Pigment Blue 15:3, C.I. Solvent Orange 63 or C.I. Solvent Violet 13, and exposing the shaped article to a laser beam having a main wavelength of 1064 nm or of 532 nm.

6. A plastics molding composition as claimed in one or more of claims 1 to 4 or a process for the production as claimed in claim 5, wherein the molding composition contains (d) further additives if appropriate.

7. The use of a plastics molding composition as claimed in one or more of claims 1 to 4 and 6 as a material for the production of shaped objects which are provided with colored symbols using a laser beam.

## Revendications

1. Matière de moulage synthétique, caractérisée en ce qu'elle est constituée (a) de polyoxyméthylène (POM) ou de poly(téréphtalate de butylène) (PBT), (b) de 0,01 à 8% en poids de charbon d'os contenant de 70 à 90% en poids de phosphate de calcium et de 30 à 10% en poids de carbone, le carbone étant incorporé dans une matrice de phosphate de calcium, et (c) d'au moins un autre colorant sélectionné dans le groupe comprenant le C.I. Pigment Yellow 180, le C.I. Pigment Red 209, le C.I. Pigment Brown 24, le C.I. Pigment Green 7, le C.I. Pigment Blue 15:3, le C.I. Solvent Orange 63 ou le C.I. Solvent Violett 13.

2. Matière de moulage synthétique selon la revendication 1, caractérisée en ce que le composant (a) est un copolymère d'oxyméthylène.

3. Matière de moulage synthétique selon la revendication 1 ou 2, caractérisée en ce que le diamètre des particules du pigment (b) est compris dans la plage de 1 à 50 µm.

4. Matière de moulage synthétique selon l'une ou plusieurs des revendications 1 à 3, caractérisée en ce que la quantité du colorant (c) est de 0,001 à 10% en poids.

5. Procédé de fabrication d'un corps moulé doté de signes colorés à partir d'une matière de moulage synthétique, par l'action d'un rayonnement laser, caractérisé en ce que l'on utilise une matière de moulage synthétique qui est composée (a) de polyoxyméthylène (POM) ou de poly(téréphtalate de butylène) (PBT), (b) de 0,01 à 8% en poids de charbon d'os contenant de 70 à 90% en poids de phosphate de calcium et de 30 à 10% en poids de carbone, le carbone étant incorporé dans une matrice de phosphate de calcium, et (c) d'au moins un autre colorant sélectionné dans le groupe comprenant le C.I. Pigment Yellow 180, le C.I. Pigment Red 209, le C.I. Pigment Brown 24, le C.I. Pigment Green 7, le C.I. Pigment Blue 15:3, le C.I. Solvent Orange 63 ou le C.I. Solvent Violett 13, et que l'on expose le corps moulé à un rayonnement laser d'une longueur d'onde principale de 1064 nm ou de 532 nm.

6. Matière de moulage synthétique selon l'une ou plusieurs des revendications 1 à 4 ou procédé de fabrication selon la revendication 5, caractérisés en ce que la matière de moulage contient éventuellement (d) d'autres additifs.

7. Utilisation de la matière de moulage synthétique selon l'une ou plusieurs des revendications 1 à 4 et 6 comme matériau pour la fabrication d'objets moulés qui sont dotés de signes colorés au moyen d'un rayonnement laser.
